Europäisches Patentamt

European Patent Office

Office européen des brevets

(11) Publication number: **0 105 035**
**B1**

# EUROPEAN PATENT SPECIFICATION

(45) Date of publication of patent specification: **06.05.87**

(51) Int. Cl.⁴: **A 01 K 77/00**

(21) Application number: **83850189.8**

(22) Date of filing: **04.07.83**

(54) **Landing-net system.**

(30) Priority: **06.07.82 SE 8204179**

(43) Date of publication of application:
**04.04.84 Bulletin 84/14**

(45) Publication of the grant of the patent:
**06.05.87 Bulletin 87/19**

(84) Designated Contracting States:
**AT CH DE GB LI**

(56) References cited:
**FR-A- 982 477**
**US-A-2 544 926**

(73) Proprietor: **AAHSLUND, Aake**
**Tussilagostigen 1**
**S-833 00 Strömsund (SE)**

(72) Inventor: **ÖGREN, Sture**
**Bjurträsket**
**S-935 00 Norsjö (SE)**

(74) Representative: **Onn, Thorsten et al**
**AB STOCKHOLMS PATENTBYRA Box 3129**
**S-103 62 Stockholm (SE)**

Courier Press, Leamington Spa, England.

## Description

This invention relates to a landing-net system comprising a foldable landing-net, which has a shaft provided with a handle, a carrier means in the form of a sleeve movable along the shaft, at which two frame arms included in the net hoop are mounted, the free ends of the arms being connected to a flexible, wire-like means, which is also included in the net hoop, a net basket being arranged at the net hoop, the frame arms being so attached to the carrier means that they can be moved towards each other, and means to apply a force to the arms tending to move them apart.

A great number of landing-nets, also collapsible such ones, are previously known. FR—A—982 477 discloses one such landing net.

A constant problem of landing-nets is having them easily available when needed, i.e. when there is a fish on the hook. One solution is having the landing-net fastened to one's belt, but there may be problems unfastening the landing-net from the belt with one hand and unfolding it in case it is in collapsed condition.

A collapsible landing-net of the kind mentioned in the preceding paragraph is previously known from US—A—2544926. However, it seems doubtful to us whether this known landing-net can be unfolded using one hand only.

Another disadvantage of all known landing-nets in principle is that the net basket becomes easily ensnared in loose things brought along in hobby fishing.

It is the object of this invention to provide a landing-net system, in which the disadvantages indicated above are avoided. Thus, the landing-net of the invention should always be at hand and unfold substantially automatically by using one hand only. This object is realized by means of a landing-net system having the characteristic features defined in the appended claims.

One illustrative example of the invention will be described below with reference to the enclosed drawings, where *Fig. 1* shows a view of the landing-net system according to the invention when the landing-net is in unused condition; *Fig. 2* shows a view of the system according to the invention when the net is drawn out of its sheath but not unfolded; *Fig. 3* shows a view of the landing-net included in the system in position of use; and *Fig. 4* shows a view of how the landing-net is folded.

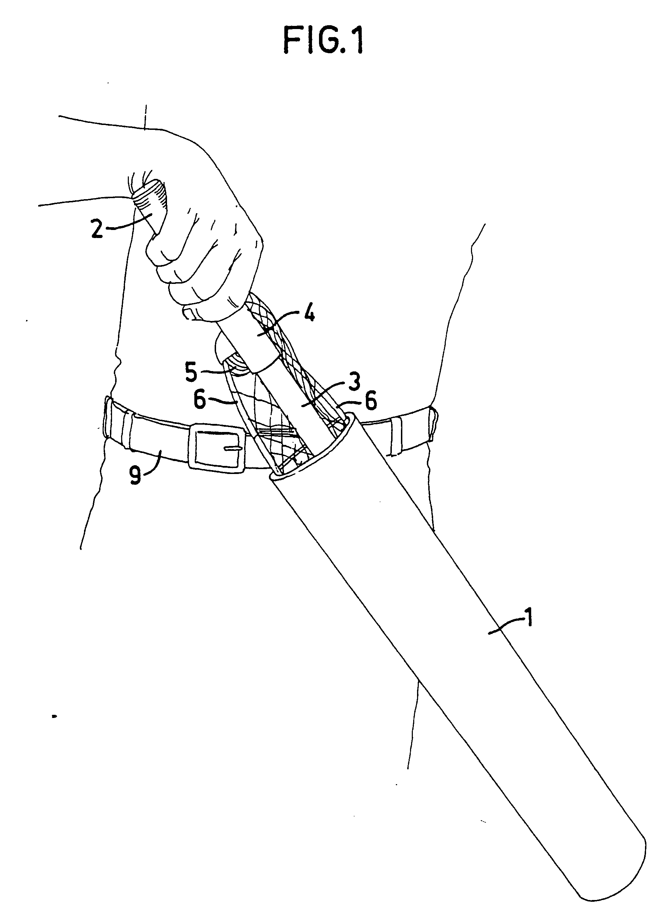

As is evident from Fig. 1 the landing-net of the invention is inserted into a sheath 1 when not used.

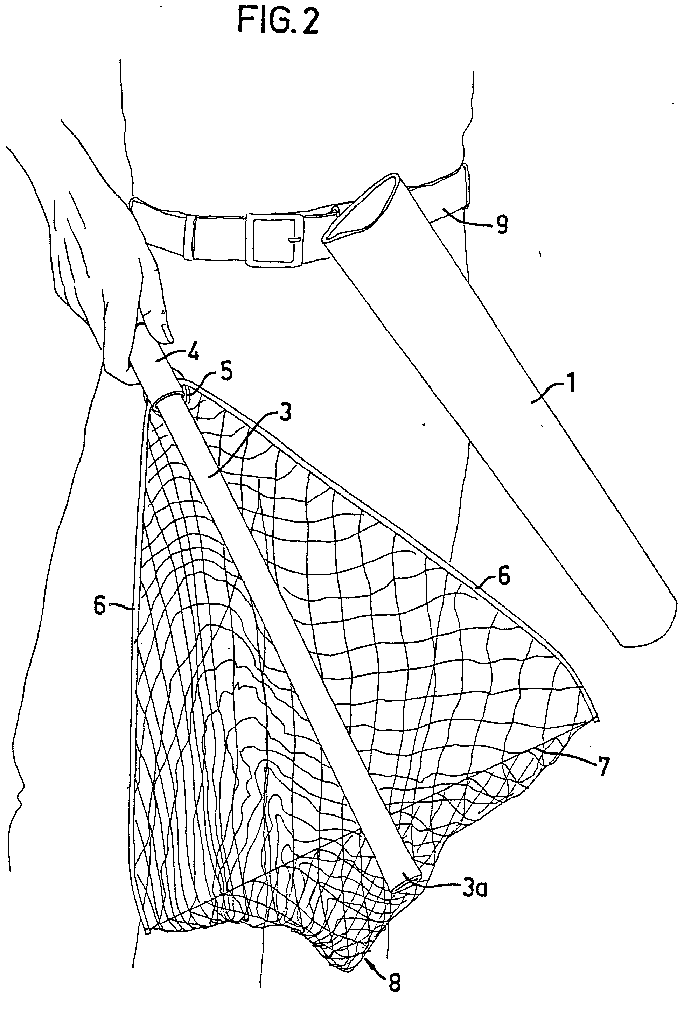

- The landing-net of the invention comprises a handle 2 and a shaft 3 (see also Figs. 2—4), the free end 3a of the shaft 3 extending conically.

A sleeve 4 is movable along the shaft 3, the inside diameter of the sleeve being adapted so that it is clamped to the shaft 3 when pushed to coaction with the free end 3a of the shaft 3.

A torsion spring 5, the ends of which are extended to form frame arms 6, is arranged on the sleeve 4 in a suitable manner. As the arms 6 are integral with the torsion spring 5 these are also made of spring steel.

The free ends of the frame arms 6 are reciprocally connected by means of a wire 7 of a flexible, preferably metallic material. The two arms 6 and the wire 7 form together the so-called net hoop. A net basket 8 of a suitable mesh size is arranged at the net hoop.

The system of sheath and landing-net described above functions in the following way.

As stated above the landing-net is inserted into the sheath 1 when not used, the sheath 1 preferably hanging in a belt 9 or some other attachment on the fisherman.

As the fisherman intends to use the landing-net, usually when having a fish on the hook, he grasps the handle 2 of the landing-net with one of his hands (his other hand is holding the fishing rod). In doing this he also grasps the sleeve 4, e.g. by his thumb, after which the landing-net is drawn out of the sheath 1, which is shown in Fig. 1.

The moment the landing-net is completely drawn out of the sheath 1 the frame arms 6 are spread apart due to the action of the torsion spring 5, the wire 7 being stretched, see Fig. 2. The net basket 8 is then hanging down from the net hoop formed by the arms 6 and the wire 7.

Now the fisherman lets go his grip of the sleeve 4 simultaneously as he inclines the free end of the shaft 3 downwards. The sleeve 4 will then slide downwards along the shaft 3 until it is wedged against the conical portion 3a, see Fig. 2. This wedging will be quite sufficient merely by the sleeve sliding freely by its own weight along the shaft 3.

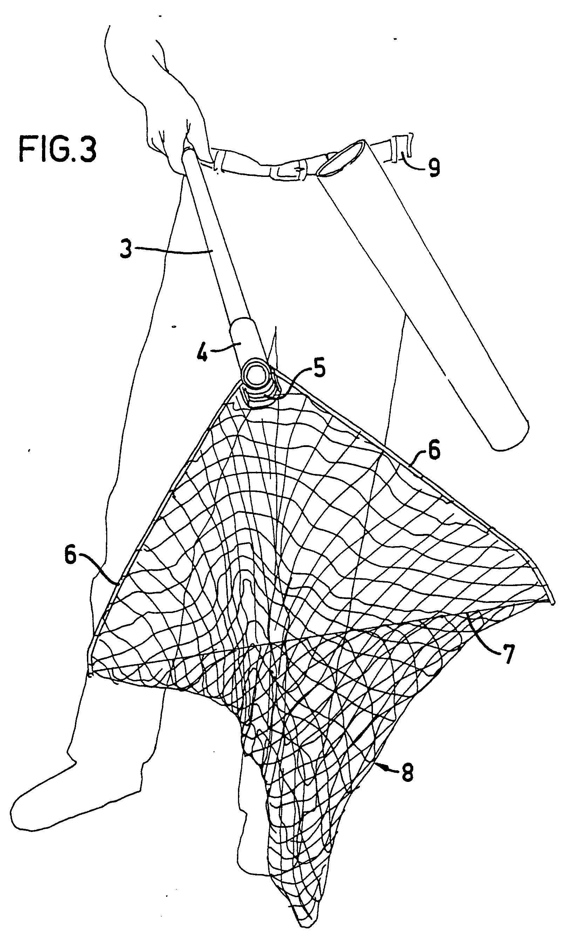

The landing-net is now ready for use, and it should be observed that the fisherman has used only one (1) hand to transfer the net from position of rest in the sheath to the position of use according to Fig. 3.

When the fisherman has used the landing-net, usually to lift a fish out of the water, it is to be returned to position of rest and be placed in the sheath 1. It is then preferably proceeded as follows:

The sleeve 4 is loosened from its engagement with the conical portion 3a of the shaft 3 by drawing it towards the handle 2. When the wire 7 passes the end 3a it is seen to it that the wire 7 is on the same side of the shaft 3 as the spring 5. The landing-net is now in the position shown in Fig. 2.

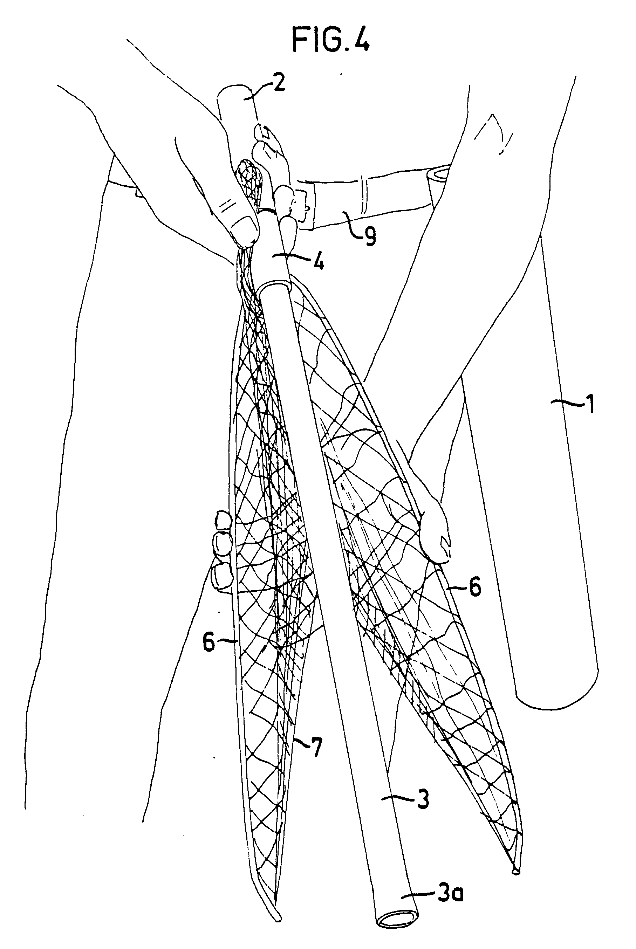

The fisherman now catches hold of the tip of the net basket 8 and moves it upwards outside the wire 7, after which he moves the tip towards himself to bear against the sleeve 4, where it is clamped e.g. by means of his thumb, see Fig. 4.

Thanks to the folding procedure described above the central part of the wire 7 will be displaced towards the handle 2, see Fig. 4, the free ends of the frame arms 6 being moved towards each other against the action of the torsion spring 5. The continued folding of the landing-net meaning that the free ends of the arms 6 are moved to bear against or even past each other, e.g. as shown in Fig. 4, is then carried out in such a way that the fisherman grasps the arms 6 with his free hand. When the arms 6 have been moved enough far towards each other the landing-net is pushed down into the sheath 1 and enters position of rest.

It is apparent from the above that the lower portion of the net basket is located above the arms 6 and the wire 7 when the landing-net is inserted into the sheath 1. However, the net basket 8 will automatically enter the position shown in Fig. 2. This is made in such a way that at the moment when the free ends of the arms 6 are detached from the sheath 1 they will move from each other by the action of the spring 5. The wire 7 will then be stretched, the lower portion of the net basket 8 being then thrown outwards away from the handle 2 and then falling downwards to the position shown in Fig. 2.

Of course the invention is not restricted to the illustrative example described above. Thus, another force exerting means than a spring can possibly actuate the frame arms 6. It is also possible that the sleeve is fixed to the free end of the shaft 3 by the aid of a snap-lock or the like.

**Claims**

1. A landing-net system comprising a foldable landing-net, which has a shaft (3) provided with a handle (2), a carrier means (4) in the form of a sleeve movable along the shaft (3), on which two frame arms (6) included in the net hoop are mounted, the free ends of the arms (6) being connected to a flexible, wire-like means (7), which is also included in the net hoop, a net basket (8) being arranged at the net hoop, the frame arms (6) being so attached to the carrier means (4) that they can be moved towards each other, and means (5) to apply a force to the arms (6) tending to move them apart, characterized in that the shaft (3) is provided with a conically extending portion (3a) at its free end so that the sleeve (4) is clamped to the shaft (3) when pushed to coact with the free end (3a) of the shaft (3), that the means applying a force to the arms is a torsion spring (5) integral with the frame arms (6), and that the landing net is inserted in a separate storage container in the form of a sheath (1) when not in use.

2. The system of claim 1, characterized in that the free ends of the arms (6) are connected to a metal wire (7).

**Patentansprüche**

1. Keschersystem, das einen zusammenlegbaren Kescher umfasst, der a) einen mit einem Griff (2) versehenen Stiel (3), b) ein Tragmittel (4) in der Form einer längs des Stiels (3) verschiebbaren Hülse, woran zwei im Hamenbügel enthaltene Rahmenstangen (6) montiert sind, wobei die freien Enden der Stangen (6) mit einem biegsamen, drahtähnlichen Mittel (7) verbunden sind, das auch im Hamenbügel enthalten ist, c) einen Hamenkorb (8), der am Hamenbügel angebracht ist, wobei die Rahmenstangen (6) derart am Tragmittel (4) befestigt sind, dass sie gegeneinander verschoben werden können, und d) Mittel (5) zum Ansetzen einer Kraft an die Stangen, die dazu neigt, sie auseinander zu bewegen, hat, dadurch gekennzeichnet, dass der Stiel (3) an seinem freien Ende mit einem sich konisch erweiternden Teil (3a) versehen ist, so dass die Hülse (4) am Stiele (3) festgeklemmt wird, wenn sie zur Zusammenwirkung mit dem freien Ende (3a) des Stiels (3) getrieben wird, dass das Mittel, das eine Kraft an die Stangen ansetzt, aus einer Torsionsfeder (5) besteht, die eine Einheit mit den Rahmenstangen (6) bildet, und dass der Kescher in einen separaten Verwahrungsbehälter in der Form eines Köchers (1) eingesetzt ist, wenn er nicht benutzt wird.

2. System nach Anspruch 1, dadurch gekennzeichnet, dass die freien Enden der Stangen (6) mit einem Metalldraht (7) verbunden sind.

**Revendications**

1. Système d'épuisette à filet comprenant une épuisette pliante comportant un manche (3) pourvu d'une poignée (2), un support (4) constitué par un manchon glissant le long du manche (3) et portant deux baleines (6) faisant partie du cerceau, les extrémités libres des baleines (6) étant reliées à un moyen filiforme flexible (7) faisant également partie du cerceau portant un filet en poche (8), les baleines (6) étant fixées au support (4) de manière à pouvoir être rapprochées l'une de l'autre, et un moyen (5) servant à charger les baleines (6) d'une force tendant à les écarter, caractérisé en ce que le manche (3) comporte à son extrémité libre une partie coniquement évasée (3a), de manière que le manchon (4) soit bloqué sur le manche (3) lorsqu'il est poussé à fond pour coopérer avec l'extrémité libre (3a) du manche (3), en ce que le moyen chargeant les baleines (6) d'une force est un ressort à torsion (5) réalisé d'une seule pièce avec les baleines (6), et en ce que l'épuisette est insérée dans une gaine (1) de protection lorsqu'elle n'est pas utilisée.

2. Système selon la revendication 1, caractérisé en ce que les extrémités libres des baleines (6) sont reliées à un fil métallique (7).

# FIG.1

# FIG.2

2

FIG.3

3

4

5

6

6

7

8

9

# FIG. 4

4